# EUROPEAN PATENT APPLICATION

(11) **EP 1 204 281 A1**
(43) Date of publication of application: **08.05.2002**
(21) Application number: 01938722.4
(22) Date of filing: 18.06.2001
(51) Int. Cl.: H04Q 7/22

(54) **RADIO COMMUNICATION SYSTEM**

(30) Priority: 16.06.2000 JP 2000181805
(71) Applicant: MATSUSHITA ELECTRIC INDUSTRIAL CO., LTD., Kadoma-shi, Osaka 571-8501 (JP)
(72) Inventor: FUKUI, Akito, Yokohama-shi, Kanagawa 232-0064 (JP)
(74) Representative: Grünecker, Kinkeldey, Stockmair & Schwanhäusser Anwaltssozietät
(86) International application number: JP0105179
(87) International publication number: WO0197540

(57) **Abstract**

In order to select a base station with the high possibility of being requested from a communication terminal to transmit data, using a downlink state report transmitted from the communication terminal to a base station, each base station determines whether the base station is a base station with the high possibility of being requested from the communication terminal to transmit data, and transmits the determination result to a control station as control information of flow between the control station and base station, and the control station transmits data to the base station.

## Description

### Technical Field

The present invention relates to a wireless communication system that performs data communications.

### Background Art

In a wireless communication system a technique is used which is called SSDT (Site Selection Diversity Transmit Power Control) in diversity handover. In SSDT, a communication terminal measures channel states such as received power and SIR on channels from base stations, selects a base station that provides the highest level, and transmits information indicative of having selected the base station on uplink to the base station. Only the selected base station transmits data on downlink.

Thus, by using SSDT, it is possible to prevent interference in other stations caused by transmission with high power of a base station with poor channel state.

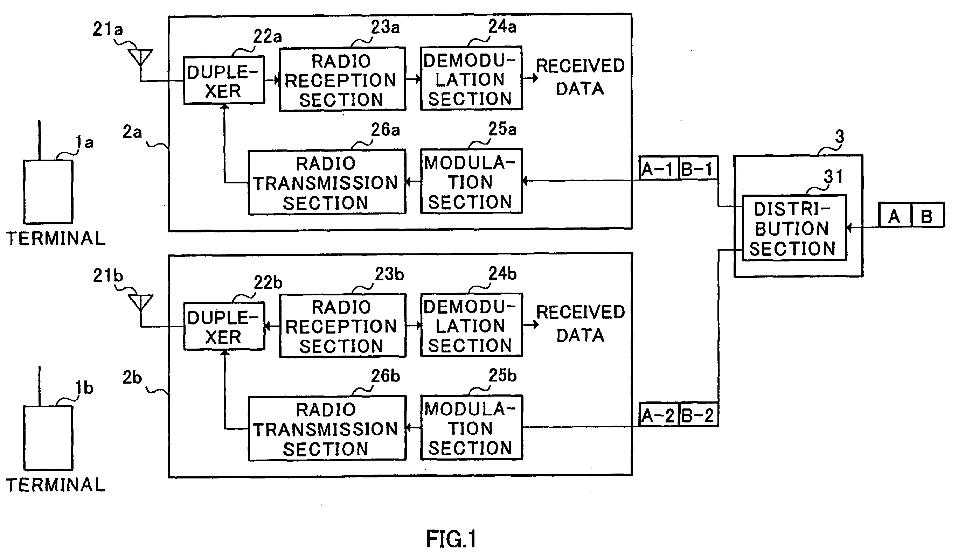

The operation using SSDT will be described with reference to FIG.1. FIG.1 is a block diagram to explain data communications using conventional SSDT. A case will be described herein where communication terminals (abbreviated as terminal in the figure) 1a and 1b perform wireless communications with base stations 2a and 2b.

In order for communication terminal 1a to communicate with either base station 2a or 2b, distribution section 31 in control station 3 replicates data A to communication terminal 1a as data A-1 to base station 2a and as data A-2 to base station 2b, and transmits respective data to base stations 2a and 2b.

In base stations 2a and 2b, received signals undergo the predetermined radio processing in radio reception sections 23a and 23b, and are demodulated in demodulation sections 24a and 24b to be received data, respectively.

In base station 2a, modulation section 25a modulates data A-1 from control station 3 to output to radio transmission section 26a. Radio transmission section 26a performs the predetermined radio transmission processing (such as D/A conversion and upconverting) on the modulated data A-1. The data A-1 subjected to the radio transmission processing is transmitted via duplexer 22a from antenna 21a to communication terminal 1a.

In base station 2b, modulation section 25b modulates data A-2 from control station 3 to output to radio transmission section 26b. Radio transmission section 26b performs the predetermined radio transmission processing on the modulated data A-2. The data A-2 subjected to the radio transmission processing is transmitted via duplexer 22b from antenna 21b to communication terminal 1a.

Distribution section 31 in control station 3 also replicates data B to communication terminal 1b as data B-1 to base station 2a and as data B-2 to base station 2b, and transmits respective data to base stations 2a and 2b.

Base station 2a performs the same processing as described above, and transmits the data B-1 to communication terminal 1b. Base station 2b performs the same processing as described above, and transmits the data B-2 to communication terminal 1b.

At this point, when communication terminal 1a determines that the state of downlink with base station 2a is good, the terminal 1a instructs base station 2a to transmit the data A-1. Then, base station 2a transmits the data A-1 to communication terminal 1a. Similarly, when communication terminal 1b determines that the state of downlink with base station 2b is good, base station 2b transmits the data B-2 to communication terminal 1b.

At this point, base station 2b to which communication terminal 1a does not request abandons the data A-2 to communication terminal 1a already transmitted from control station 3, while base station 2a to which communication terminal 1b does not request abandons the data B-1 to communication terminal 1b already transmitted from control station 3.

However, in the above-mentioned wireless communication system that performs conventional SSDT, regardless of the fact that a communication terminal communicates with a single base station, the same data should be prepared for a plurality of base stations. As a result, there is a problem of increasing the amount of data transmitted from a control station to base stations.

### Disclosure of Invention

It is an object of the present invention to provide a wireless communication system capable of achieving SSDT without increasing a data amount.

It is a subject matter of the present invention that in order to select a base station with a high possibility of being requested from a communication terminal to transmit data, using downlink state reports transmitted from the communication terminal to base stations, a control station or base station determines the base station with the high possibility of being requested from the communication terminal to transmit data, and the control station transmits data to the determined base station, thereby decreasing the amount of data transmitted from the control station to the base stations.

### Brief Description of Drawings

FIG.1 is a diagram illustrating a conventional wireless communication system;
FIG.2 is a block diagram illustrating a wireless communication system according to a first embodiment of the present invention;
FIG.3 is a block diagram illustrating a configuration of a communication terminal in the wireless communication system of the present invention; and
FIG.4 is a block diagram illustrating a wireless communication system according to a second embodiment of the present invention.

### Best Mode for Carrying Out the Invention

Embodiments of the present invention will be described below specifically with reference to accompanying drawings.

### (First embodiment)

This embodiment describes a case where a base station makes a determination of a base station with the high possibility of being requested from a communication terminal to transmit data, and performs data flow control on downlink between a control station and base station.

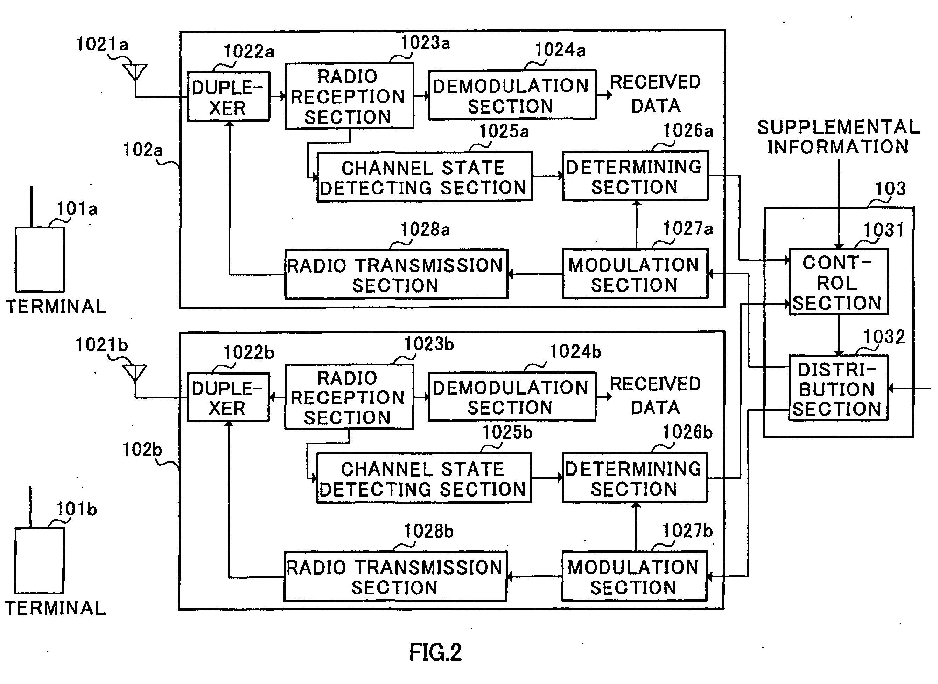

FIG.2 is a block diagram illustrating a wireless communication system according to the first embodiment of the present invention. In FIG.2, uplink signals transmitted from communication terminals 101a and 101b are received in radio reception section 1023a via antenna 1021a and duplexer 1022a in base station 102a. Radio reception section 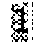 023a performs the predetermined radio reception processing on the received signals. The signals subjected to the radio reception processing are output to demodulation section 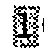 024a, where the signals are demodulated to be received data.

Meanwhile, the signals subjected to the radio reception processing are output to channel state detecting section 1025a, which detects downlink states reported from the communication terminals. The detection result is output to determining section 1026a. Based on the detection result, determining section 1026a determines whether base station 102a is a base station with the high possibility of being requested transmission of data from either of the communication terminals.

Transmit data to be transmitted to communication terminals 101a and 101b is distributed in distribution section 1032 in control station 103 and is transmitted to modulation section 1027a in base station 102a. Modulation section 1027a modulates the transmit data to output to radio transmission section 1028a.

Radio transmission section 1028b performs the predetermined radio transmission processing on the modulated transmit data. Signals subjected to the radio transmission processing are transmitted to communication terminals 101a and 101b from antenna 1021a via duplexer 1022a.

Similarly, uplink signals transmitted from communication terminals 101a and 101b are received in radio reception section 1023b via antenna 1021b and duplexer 1022b in base station 102b. Radio reception section 1023b performs the predetermined radio reception processing on the received signals. The signals subjected to the radio reception processing are output to demodulation section 1024b, where the signals are demodulated to be received data.

Meanwhile, the signals subjected to the radio reception processing are output to channel state detecting section 1025b, which detects downlink states reported from the communication terminals. The detection result is output to determining section 1026b. Based on the detection result, determining section 1026b determines whether base station 102b is a base station with the high possibility of being requested transmission of data from either of the communication terminals.

Transmit data to be transmitted to communication terminals 101a and 101b is distributed in distribution section 1032 in control station 103 and is transmitted to modulation section 1027b in base station 102b. Modulation section 1027b modulates the transmit data to output to radio transmission section 1028b.

Radio transmission section 1028b performs the predetermined radio transmission processing on the modulated transmit data. Signals subjected to the radio transmission processing are transmitted to communication terminals 101a and 101b from antenna 1021b via duplexer 1022b.

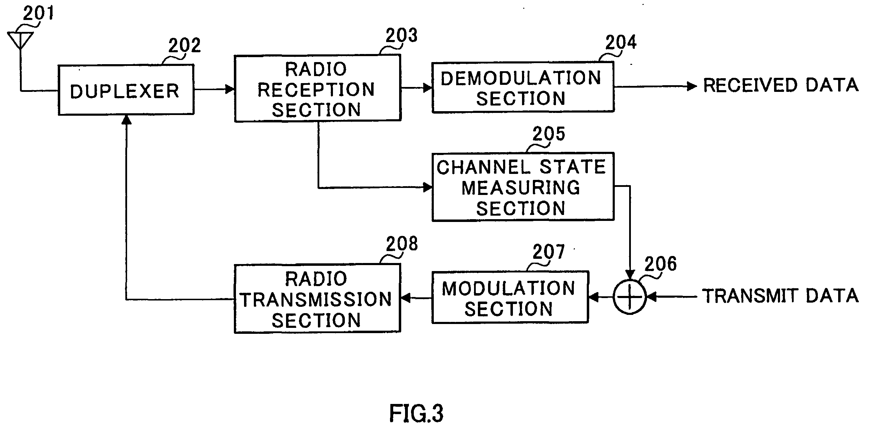

FIG.3 is a block diagram illustrating a configuration of a communication terminal in the wireless communication system of the present invention. In FIG.3, downlink signals transmitted from base stations 102a and 102b are received in radio reception section 203 via antenna 201 and duplexer 202. Radio reception section 203 performs the predetermined radio reception processing on the received signals. The signals subjected to the radio reception processing are output to demodulation section 204, where the signals are demodulated to be received data.

Meanwhile, the signals subjected to the radio reception processing are output to channel state measuring section 205, which measures downlink states of signals from the base stations, while generating downlink power control information. The measurement result and power control information is output to adder 206.

Transmit data to be transmitted to base stations 102a and 102b is multiplexed with the measurement result in adder 206, and the resultant is output to modulation section 207. Modulation section 207 modulates the transmit data to output to radio transmission section 208.

Radio transmission section 208 performs the predetermined radio transmission processing on the modulated transmit data. Signals subjected to the radio transmission processing are transmitted to base stations 102a and 102b from antenna 201 via duplexer 202.

The operation in the wireless communication system with the above-mentioned configuration will be described.

In each of communication terminals 101a and 101b, a downlink signal is received, and channel state measuring section 205 measures a channel state of the downlink signal. Measurement of the channel state includes, for example, but not limited, measurement of received SIR (Signal to Interference Ratio) of the downlink signal.

Channel state measuring section 205 outputs the measured channel state and downlink power control information based on the channel state to adder 206, and adder 206 multiplexes the measurement and information on transmit data. The multiplexed channel state measurement, downlink power control information and transmit data is transmitted to base stations 102a and 102b on uplink.

In each of base stations 102a and 102b, the channel state measurement, downlink power control information is demultiplexed from the received signal, and channel state detecting section 1025a or 1025b detects the channel state, and transmits the detection result of the channel state to determining section 1026a or 1026b, respectively. In addition, the detection result of the channel state includes, for example, but not limited, received SIR on downlink, an average value of received SIR over a plurality of radio frames, an estimate of bit error rate, and count of downlink power control information, each measured in a terminal.

Determining sections 1026a and 1026b each determine a base station with the high possibility of being requested from the communication terminal to transmit data, based on the detection result of the channel state. Then, determining sections 1026a and 1026b each transmit the determination result of whether base station 102a or 102b is the base station with the high possibility of being requested to control section 1031 in control station 103 as flow control information of downlink data between the control station and base station, respectively. According to the determination results from base stations 102a and 102b, control section 1031 instructs distribution section 1032 to distribute data only to the base station with the high possibility of being requested from the communication terminal to transmit data. According to the determination result from control section 1031, distribution section 1032 distributes data to each communication terminal.

For example, when detected information on channel state is indicative of the downlink state between communication terminal 101a and base station 102a being good, and of the downlink state between communication terminal 101a and base station 102b being poor, determining section 1026a determines that base station 102a is the base station with the high possibility of being requested from the communication terminal, and transmits the detection result to control section 1031 in control station 103 as the flow control information of downlink data between the control station and base station.

Meanwhile, in base station 102b, based on the output from channel state detecting section 1025b, determining section 1026b determines base station 102b has a low possibility of being requested transmission of data from communication terminal 101a, and transmits the detection result to control section 1031 in control station 103 as the flow control information of downlink data between the control station and base station.

Based on the respective determination results from base stations 102a and 102b, control section 1031 determines to transmit data only to base station 102a to instruct distribution section 1032. According to the instruction, distribution section 1032 distributes the data only to base station 102a.

In making determinations in determining sections 1026a and 1026b, it may be possible to use buffer usage amounts in modulation sections 1027a and 1027b, other than the channel states from channel state detecting sections 1025a and 1025b, respectively. In this case, the determination may be made so that downlink data transmission from the control station to the base station is suppressed only when the buffer usage amount in modulation section 1027a or 1027b is not less than a predetermined value, and the station 102a or 102b may transmit the determination result to control section 1031 in control station 103 as the flow control information of downlink data between the control station and base station.

Further, in making determinations in determining sections 1026a and 1026b, it may be possible to use supplemental information indicative of required quality such as an allowance of delay time for each of communication terminals 101a and 101b, other than the channel states from channel state detecting sections 1025a and 1025b, and buffer usage amounts in modulation sections 1027a and 1027b,respectively. In this case, the determination may be made so that the control station transmits data to communication terminal 101a preferentially to the base station when the data to communication terminal 101a has a less allowance of delay time than data to communication terminal 101b, and the stations 102a and 102b may transmit the determination results to control section 1031 in control station 103 as the flow control information of downlink data between the control station and base station.

Thus, in the wireless communication system according to this embodiment, in order to select a base station with the high possibility of being requested from a communication terminal to transmit data, each of base stations uses a downlink state report transmitted from the communication terminal to the base station, determines whether the base station is a base station with the high possibility of being requested from the communication terminal to transmit data, based on the report, and transmits the determination result to a control station as flow control information of downlink data between the control station and base station. Then, based on the determination result, the control station transmits data only to the base station with the high possibility of being requested from the communication terminal to transmit data. It is thereby possible to reduce an amount of data transmitted from the control station to base stations in SSDT.

Further, when communication terminals 101a and 101b both have good states on downlink with base station 102a and control station 103 needs to concurrently transmit data to communication terminals 101a and 101b, control section 1031 in control station 103 controls data transmission timing using supplemental information indicative of required quality such as an allowance of delay time for each of communication terminals 101a and 101b.

For example, delay is allowed in packet transmission, while being not allowed in speech transmission basically. Therefore, as the supplemental information, delay information may be used which instructs to delay data of packet transmission, while preferentially transmitting data of speech transmission.

Thus, by delaying either data corresponding to the required quality (supplemental information), it is possible to prevent congestion on traffic from control station 103 to base stations 102a and 102b. Further, by instructing to transmit data in descending order of required quality (determining transmission priorities), taking account of the required quality such as an allowance of delay time of data for each communication terminal, it is possible to reduce an amount of data from the control station to base stations, and to ensure communication quality such as delay time.

### (Second embodiment)

This embodiment describes a case where base stations report respective downlink channel states to a control station, and the control station makes a determination of a base station with the high possibility of being requested from a communication terminal to transmit data, and transmits data to the base station with the high possibility of being requested from the communication terminal to transmit data.

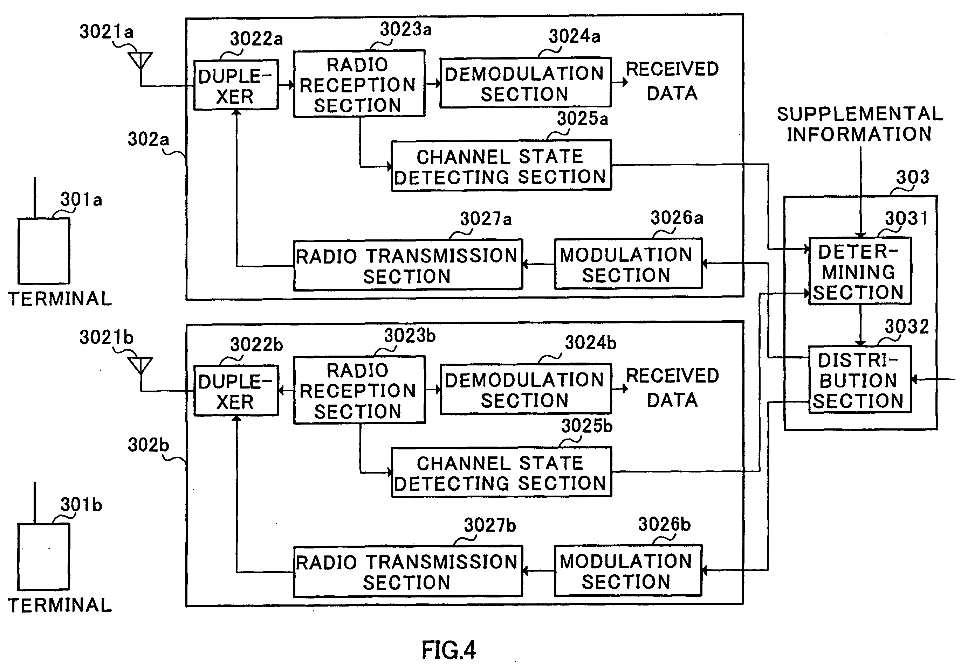

FIG.4 is a block diagram illustrating a wireless communication system according to the second embodiment of the present invention. In FIG.4, uplink signals transmitted from communication terminals 301a and 301b are received in radio reception section 3023a via antenna 3021a and duplexer 3022a in base station 302a. Radio reception section 3023a performs the predetermined radio reception processing (such as downconverting and A/D conversion) on the received signals. The signals subjected to the radio reception processing are output to demodulation section 3024a, where the signals are demodulated to be received data.

Meanwhile, the signals subjected to the radio reception processing are output to channel state detecting section 3025a, which detects downlink states reported from the communication terminals. The detection result is output to determining section 3031 in control station 303.

Transmit data to be transmitted to communication terminals 301a and 301b are distributed in distribution section 3032 in control station 303 and are transmitted to modulation section 3026a in base station 302a. Modulation section 3026a modulates the transmit data to output to radio transmission section 3027a.

Radio transmission section 3027a performs the predetermined radio transmission processing (such as D/A conversion and upconverting) on the modulated transmit data. Signals subjected to the radio transmission processing are transmitted to communication terminals 301a and 301b from antenna 3021a via duplexer 3022a.

Similarly, uplink signals transmitted from communication terminals 301a and 301b are received in radio reception section 3023b via antenna 3021b and duplexer 3022b in base station 302b. Radio reception section 3023b performs the predetermined radio reception processing (such as downconverting and A/D conversion) on the received signals. The signals subjected to the radio reception processing are output to demodulation section 3024b, where the signals are demodulated to be received data.

Meanwhile, the signals subjected to the radio reception processing are output to channel state detecting section 3025b, which detects downlink states reported from the communication terminals. The detection result is output to determining section 3031 in control station 301.

Transmit data to be transmitted to communication terminals 301a and 301b are distributed in distribution section 3032 in control station 303 and are transmitted to modulation section 3026b in base station 302b. Modulation section 3026b modulates the transmit data to output to radio transmission section 3027b.

Radio transmission section 3027b performs the predetermined radio transmission processing (such as D/A conversion and upconverting) on the modulated transmit data. Signals subjected to the radio transmission processing are transmitted to communication terminals 301a and 301b from antenna 3021b via duplexer 3022b.

The operation in the wireless communication system with the above-mentioned configuration will be described In addition, since a configuration of the communication terminal which performs wireless communications with the base station is the same as in FIG.3, FIG.3 will be used as appropriate in the following description.

In each of communication terminals 301a and 301b, a downlink signal is received, and channel statemeasuring section 205 measures a channel state of the downlink signal. Measurement of the channel state includes, for example, but not limited, measurement of received SIR (Signal to Interference Ratio) of the downlink signal.

Channel state measuring section 205 outputs the measured channel state and power control information on downlink based on the channel state to adder 206, and adder 206 multiplexes the measurement and information on transmit data. The multiplexed channel state measurement, downlink power control information and transmit data is transmitted to base stations 302a and 302b on uplink.

In each of base stations 302a and 302b, the channel state measurement, downlink power control information is demultiplexed from the received signal, and channel state detecting section 3025a or 3025b detects the channel state, and transmits the detection result of the channel state to determining section 3031 in control station 303, as detected information. In addition, the detection result of the channel state includes, for example, but not limited, received SIR on downlink, an average value of received SIR over a plurality of radio frames, an estimate of bit error rate, and count of power control information on downlink, each measured in a terminal.

In control station 303, determining section 3031 receives the detected information on channel state, and based on the detected information, determines a base station with the high possibility of being requested from the communication terminal to transmit data. Then, determining section 3031 instructs distribution section 3032 to distribute data only to the base station with the high possibility of being requested from the communication terminal to transmit data. According to the determination result from determining section 3031, distribution section 3032 distributes data to each communication terminal.

For example, when the detected information on channel state is indicative of the downlink state between communication terminal 301a and base station 302a being good, and of the downlink state between communication terminal 301a and base station 302b being poor, determining section 3031 determines to transmit data only to base station 302a based on the channel state information indicative of the downlink state to instruct distribution section 3032 . According to the determination result from determining section 3031, distribution section 3032 distributes data only to base station 302a.

Thus, in the wireless communication system according to this embodiment, in order to select a base station with the high possibility of being requested from a communication terminal to transmit data, a control station uses downlink state reports transmitted from a communication terminal to base stations, determines based on the reports a base station with the high possibility of being requested from the communication terminal to transmit data, and based on the determination, transmits data only to the base station with the high possibility of being requested from the communication terminal to transmit data. It is thereby possible to reduce an amount of data transmitted from the control station to base stations in SSDT.

A communication terminal transmits a report of downlink state to a base station at short intervals, for example, using a radio frame as a basic interval. Therefore, by using the report at short intervals, a determining section in a control station is capable of making a determination always corresponding to a radio channel state.

Further, when communication terminals 301a and 301b both have good states of downlink with base station 302a and control station 303 needs to concurrently transmit data to communication terminals 301a and 301b, determining section 3031 in control station 303 controls data transmission timing using supplemental information indicative of required quality such as an allowance of delay time for each of communication terminals 301a and 301b.

For example, delay is allowed in packet transmission, while being not allowed in speech transmission basically. Therefore, as the supplemental information, delay information may be used which instructs to delay data of packet transmission, while preferentially transmitting data of speech transmission.

Thus, by delaying either data corresponding to the required quality (supplemental information), it is possible to prevent congestion on traffic from control station 303 to base stations 302a and 302b. Further, by instructing to transmit data in descending order of required quality, taking account of the required quality such as an allowance of delay time of data for each communication terminal, it is possible to reduce an amount of data from a control station to base stations, and to ensure communication quality such as delay time.

A communication terminal transmits a report of downlink state to a base station at short intervals, for example, using a radio frame as a basic interval. Therefore, by using the report at short intervals, a determining section in a control station is capable of making a determination always corresponding to a radio channel state.

The present invention is not limited to the above embodiments 1 and 2, and is capable of being carried into practice with various modifications thereof. For example, while the above embodiments 1 and 2 describe the case of transmitting data only to a base station with the high possibility of being requested from a communication terminal to transmit data, it may be possible in the present invention to transmit data to a plurality of base stations in descending order of the possibility of being requested from a communication terminal to transmit data.

A wireless communication system of the present invention adopts a configuration, in site selection diversity transmit power control, where base stations report to a control station respective downlink states, measured in a communication terminal, of downlink signals from base stations to the communication terminal, and based on the downlink states, the control station determines a base station with a high possibility of being requested from the communication terminal to transmit data, and transmits data for a downlink signal to the determined base station.

A wireless communication system of the present invention adopts a configuration, in site selection diversity transmit power control, where a base station determines whether the base station is a base station with a high possibility of being requested from a communication terminal to transmit data, based on the downlink state, measured in the communication terminal, of a downlink signal from the base station to the communication terminal, and transmits to a control station the determination result as flow control information of downlink data between the control station and the base station, and the control station transmits data for a downlink signal to the determined base station.

According to these configurations, it is possible to reduce an amount of data transmitted from the control station to base stations in the site selection diversity transmit power control.

A wireless communication system of the present invention in the above configuration further adopts a configuration where the control station determines transmission priorities corresponding to required quality of data for a downlink signal.

According to this configuration, since the control station instructs to transmit data in descending order of required quality taking account of the required quality such as an allowance of delay time of for each communication terminal, it is possible to reduce an amount of data from the control station to base stations, and to ensure communication quality such as delay time.

A control station apparatus of the present invention adopts a configuration, in site selection diversity transmit power control, comprising a determining section that determines a base station with a high possibility of being requested from a communication terminal to transmit data, based on downlink states, measured in the communication terminal, of downlink signals from base stations to the communication terminal, and a transmitting section that transmits data for a downlink signal to the determined base station.

A control station apparatus of the present invention adopts a configuration, in site selection diversity transmit power control, comprising a receiving section that receives, as flow control information of downlink data between the control station and a base station, information on the base station with a high possibility of being requested from a communication terminal to transmit data, where the base station is determined based on the downlink state, measured in the communication terminal, of a downlink signal from the base station to the communication terminal, and a transmitting section that transmits data for a downlink signal according to the information.

According to these configurations, it is possible to reduce an amount of data transmitted from the control station to base stations in the site selection diversity transmit power control.

A control station apparatus of the present invention in the above configuration further adopts a configuration comprising a determining section that determines transmission priorities corresponding to required quality of data for a downlink signal.

According to this configuration, since the control station instructs to transmit data in descending order of required quality taking account of the required quality such as an allowance of delay time for each communication terminal, it is possible to reduce an amount of data from the control station to base stations, and to ensure communication quality such as delay time.

As described above, according to the present invention, in order to select a base station with the high possibility of being requested from a communication terminal to transmit data, using downlink state reports transmitted from the communication terminal to base stations, a control station or base station determines the base station with the high possibility of being requested from the communication terminal to transmit data, and the control station transmits data to the base station, whereby it is possible to reduce an amount of data transmitted from the control station to the base stations.

This application is based on the Japanese Patent Application No. 2000-181805 filed on June 16, 2000, entire content of which is expressly incorporated by reference herein.

### Industrial Applicability

The present invention is applicable to a wireless communication system that performs data communications using a site selection system.

## Claims

1. A wireless communication system in site selection diversity transmit power control, wherein each base station determines whether the base station is a base station with a high possibility of being requested from a communication terminal to transmit data, based on a downlink state, in the communication terminal, of a downlink signal from the base station to the communication terminal, and transmits the determination result to a control station, and the control station transmits data for a downlink signal to the determined base station.

2. The wireless communication system according to claim 1, wherein the base station determines whether to request data to the communication terminal to the control station corresponding to a buffer usage amount in the base station, in addition to the downlink state, in the communication terminal, of the downlink signal from the base station to the communication terminal.

3. The wireless communication system according to claim 1, wherein the base station determines whether to request data to the communication terminal to the control station corresponding to required quality of the data to the communication terminal, in addition to the downlink state, in the communication terminal, of the downlink signal from the base station to the communication terminal.

4. A wireless communication system in site selection diversity transmit power control, wherein each base station reports to a control station a downlink state, in a communication terminal, of a downlink signal from the base station to the communication terminal, and based on the downlink state, the control station determines a base station with a high possibility of being requested from the communication terminal to transmit data, and transmits data for a downlink signal to the determined base station.

5. The wireless communication system according to claim 1, wherein the control station determines transmission priorities corresponding to required quality of data for a downlink signal.

6. A control station apparatus, in site selection diversity transmit power control, comprising:
receiving means for receiving information on a base station with a high possibility of being requested from a communication terminal to transmit data, the base station determined based on a downlink state, in the communication terminal, of a downlink signal from the base station to the communication terminal and;
transmitting means for transmitting data for a downlink signal according to the information.

7. A control station apparatus, in site selection diversity transmit power control, comprising:
determining means for determining a base station with a high possibility of being requested from a communication terminal to transmit data, based on respective downlink states, in the communication terminal, of downlink signals from base stations to the communication terminal; and
transmitting means for transmitting data for a downlink signal to the determined base station.

8. The control station apparatus according to claim 6, further comprising:
determining means for determining transmission priorities corresponding to required quality of data for a downlink signal.

9. A site selection diversity transmit power control method, comprising the steps of:
in each base station,
determining whether the base station is a base station with a high possibility of being requested from a communication terminal to transmit data, based on a downlink state, in the communication terminal, of a downlink signal from the base station to the communication terminal; and
transmitting the determination result to a control station, and
in the control station,
transmitting data for a downlink signal to the determined base station.

10. A site selection diversity transmit power control method, comprising the steps of:
in each base station,
determining whether to request data to the communication terminal to the control station corresponding to a buffer usage amount in the base station, in addition to the downlink state, in the communication terminal, of the downlink signal from the base station to the communication terminal; and
transmitting the determination result to a control station, and
in the control station,
transmitting data for a downlink signal to the determined base station.

11. A site selection diversity transmit power control method, comprising the steps of:
in each base station,
reporting to a control station a downlink state, in a communication terminal, of a downlink signal from the base station to the communication terminal, and
in the control station,
determining a base station with a high possibility of being requested from the communication terminal to transmit data, based on the downlink state; and
transmitting data for a downlink signal to the determined base station.

## Amended claims

### Amended claims under Art. 19.1 PCT

**1.** (Amended). Awireless communication system, wherein each base station determines whether the base station is a base station with a high possibility of being requested from a communication terminal to transmit data, based on a downlink state, in the communication terminal, of a downlink signal from the base station to the communication terminal, and transmits the determination result to a control station, and the control station transmits data for a downlink signal to the determined base station.

**2.** The wireless communication system according to claim 1, wherein the base station determines whether to request data to the communication terminal corresponding to a buffer usage amount in the base station, other than the downlink state, in the communication terminal, of the downlink signal from the base station to the communication terminal.

**3.** The wireless communication system according to claim 1, wherein the base station determines whether to request data to the communication terminal to the control station corresponding to required quality of the data to the communication terminal, other than the downlink state, in the communication terminal, of the downlink signal from the base station to the communication terminal.

**4.** (Amended). Awireless communication system, wherein each base station reports to a control station a downlink state, in a communication terminal, of a downlink signal from the base station to the communication terminal, and based on the downlink state, the control station determines a base station with a high possibility of being requested from the communication terminal to transmit data, and transmits data for a downlink signal to the determined base station.

**5.** The wireless communication system according to claim 1, wherein the control station determines transmission priorities corresponding to required quality of data for a downlink signal.

**6.** (Amended). A control station apparatus comprising:
receiving means for receiving information on a base station with a high possibility of being requested from a communication terminal to transmit data, the base station determined based on a downlink state, in the communication terminal, of a downlink signal from the base station to the communication terminal; and
transmitting means for transmitting data for a downlink signal according to the information.

**7.** (Amended). A control station apparatus comprising:
determining means for determining a base station with a high possibility of being requested from a communication terminal to transmit data, based on a downlink state, in the communication terminal, of a downlink signal from the base station to the communication terminal; and
transmitting means for transmitting data for a downlink signal to the determined base station.

**8.** The control station apparatus according to claim 6, further comprising:
determining means for determining transmission priorities corresponding to required quality of data for a downlink signal.

**9.** (Amended). A packet communication method, comprising the steps of:
in each base station,
determining whether to request data to the communication terminal corresponding to a buffer usage amount in the base station, other than the downlink state, in the communication terminal, of the downlink signal from the base station to the communication terminal; and
transmitting the determination result to a control station, and
in the control station,
transmitting data for a downlink signal to the determined base station.

**10.** (Amended). A packet communication method, comprising the steps of:
in each base station,
determining whether the base station is a base station with a high possibility of being requested from the communication terminal to transmit data, based on a downlink state, in the communication terminal, of a downlink signal from the base station to the communication terminal, and on a buffer usage amount in the base station; and
transmitting the determination result to a control station, and
in the control station,
transmitting data for a downlink signal to the determined base station.

**11.** (Amended). A communication method, comprising the steps of:
in each base station,
reporting to a control station a downlink state, in a communication terminal, of a downlink signal from the base station to the communication terminal, and
in the control station,
determining a base station with a high possibility of being requested from the communication terminal to transmit data, based on the downlink state; and
transmitting data for a downlink signal to the determined base station.
